# EUROPÄISCHE PATENTSCHRIFT

(11) **EP 3 645 653 B1**
(45) Veröffentlichungstag und Bekanntmachung des Hinweises auf die Patenterteilung: **10.01.2024**
(21) Anmeldenummer: 18730698.0
(22) Anmeldetag: 05.06.2018
(51) Int. Cl.: C09K 3/14, B24D 3/00

(54) **GEFORMTES KERAMISCHES SCHLEIFKORN**
SHAPED CERAMIC ABRASIVE PARTICLE
GRAIN ABRASIF CÉRAMIQUE MOULÉ

(30) Priorität: 27.06.2017 DE 102017210799
(43) Veröffentlichungstag der Anmeldung: 06.05.2020
(73) Patentinhaber: Robert Bosch GmbH, 70442 Stuttgart (DE)
(72) Erfinder: MISAK, Jiri, 8600 Dübendorf (CH); OLDENKOTTE, Moritz, 78479 Reichenau (DE); FUENFSCHILLING, Stefan, 78337 Öhningen (DE)
(86) Internationale Anmeldenummer: PCT/EP2018/064734
(87) Internationale Veröffentlichungsnummer: WO 2019/001908

(56) Entgegenhaltungen:
- WO-A1-2016/201104
- WO-A2-2012/061033
- US-A1- 2014 109 490
- US-B1- 6 391 072

## Beschreibung

Die Erfindung betrifft ein geformtes keramisches Schleifkorn und Schleifartikel.

### Stand der Technik

Geformte keramische Schleifkörner auf Basis von alpha-Al₂O₃ (alpha-Aluminiumoxid) sind aus dem Stand der Technik bekannt. Bei geformten Schleifkörnern handelt es sich um Schleifkörner, welche eine definierte Form und eine definierte Größe haben. Die Schleifkörner erhalten ihre definierte Form und definierte Größe aufgrund eines definierten Formgebungsprozesses. So sind zum Beispiel in WO 2014/020075 A1 verschiedene vorteilhafte Geometrien für keramische Schleifkörner beschrieben. Aus dem Stand der Technik sind ferner nicht geformte bzw. unregelmäßig geformte Schleifkörner bekannt, welche auch als gebrochene Schleifkörner bezeichnet werden. Der Vorteil von geformten keramischen Schleifkörnern liegt in ihrer höheren Schleifleistung gegenüber nicht geformten bzw. unregelmäßig geformten Schleifkörnern.

Ferner sind aus WO 2016/201104 A1 und US 6,391,072 B1 Sollbruchstellen für derartige Schleifkörner bekannt.

Zur Herstellung von geformten keramischen Schleifkörnern sind aus dem Stand der Technik unter anderem zwei Verfahren bekannt, welche ebenfalls in WO 2014/020075 A1 beschrieben sind. Als Ausgangsstoff für die Herstellung von geformten keramischen Schleifkörnern ist alpha-Al₂O₃ aus dem Stand der Technik bekannt. Wird alpha-Al₂O₃ als Ausgangsstoff verwendet, eignet sich insbesondere das sogenannte Schlicker-Verfahren für die Herstellung der Schleifkörner. Es ist aus dem Stand der Technik auch bekannt, Vorläuferprodukte des alpha-Al₂O₃, die erst bei der Herstellung der Schleifkörner in alpha-Al₂O₃ umgewandelt werden, als Ausgangsstoff für die Herstellung zu verwenden. Beispiele für geeignete Vorläuferprodukte sind die Aluminiumoxidhydroxide Böhmit (gamma-AIO(OH)) und Diaspor (alpha-AIO(OH)) sowie die Aluminiumorthohydroxide Gibbsit (gamma-Al(OH)₃) und Bayerit (alpha-Al(OH)₃). Für die Herstellung der Schleifkörner aus diesen Vorläuferprodukten wird das sogenannte Sol-Gel-Verfahren verwendet, das Schleifkörner von sehr feiner Mikrostruktur hervorbringt.

Es existiert zahlreiche Literatur zu geformten und teilweise geformten Sol-Gel-Schleifkörnern. Der Ausgangsstoff, alpha-Al₂O₃ oder Vorläuferprodukt des alpha-Al₂O₃, und das Herstellverfahren, Sol-Gel-Verfahren oder Schlicker-Verfahren, bewirken jedoch signifikante Unterschiede im Verhalten der daraus hergestellten geformten keramischen Schleifkörner.

Es besteht in der Schleifmittelindustrie ein ständiges Bedürfnis, den Werkstoffabtrag bei der Bearbeitung von metallischen Werkstücken weiter zu erhöhen.

### Offenbarung der Erfindung

Die Erfindung geht aus von einem geformten keramischen Schleifkorn, insbesondere einem geformten keramischen Schleifkorn auf Basis von alpha-Al₂O₃, aufweisend zumindest drei Flächen, von denen zumindest zwei Flächen eine gemeinsame Kante bilden, auf der zumindest eine den drei Flächen gemeinsame Ecke liegt. Erfindungsgemäß weist das Schleifkorn zumindest ein Strukturschwächungselement auf.

Unter einem geformten Schleifkorn wird im Rahmen der vorliegenden Erfindung ein Schleifkorn verstanden, welches eine definierte Geometrie aufweist. Ein geformtes Schleifkorn von definierter Geometrie weist eine definierte dreidimensionale Form von definierter Größe auf. Die definierte Form von definierter Größe wird durch einen definierten Formgebungsprozess bei der Herstellung des Schleifkorns erhalten. Die definierte Geometrie des geformten Schleifkorns soll reproduzierbar sein. Das geformte Schleifkorn soll wiederholt und gezielt in der gewünschten definierten Geometrie herstellbar sein. Ein geformtes Schleifkorn ist insbesondere kein gebrochenes oder teilweise gebrochenes Schleifkorn, welches durch Zerkleinern, insbesondere Brechen, herstellbar ist.

Als definierte dreidimensionale Formen kommen insbesondere geometrische Körper in Frage, die drei oder mehr Flächen, eine oder mehrere Kanten und eine oder mehrere Ecken und/oder Spitzen haben. Zwei aneinander angrenzende Flächen bilden dabei eine gemeinsame Kante, während drei Flächen in einer gemeinsamen Ecke aneinandergrenzen. Typischerweise begrenzt eine Ecke eine Kante.

Unter einer Fläche wird ein zusammenhängender zweidimensionaler Teil der Oberfläche des Schleifkorns verstanden, der aus Punkten besteht, an denen jeweils eine wohldefinierte, gedachte Tangentialebene an das Schleifkorn angelegt werden kann. Eine solche Fläche kann eben oder gekrümmt sein. Eine gekrümmte Fläche kann konkav oder konvex sein. Ferner kann die Fläche auch mindestens einen ebenen Abschnitt und mindestens einen gekrümmten Abschnitt aufweisen, die ohne dazwischen liegende Kante ineinander übergehen.

Eine Kante ist ein zusammenhängender eindimensionaler Teil der Oberfläche des Schleifkorns, der aus Punkten besteht, an denen zwei Flächen oder zwei Teile ein und derselben Fläche einander berühren, wobei die Tangentialebenen der beiden Flächen bzw. Flächenteile an diesen Punkten nicht stetig verlaufen. Bevorzugt liegt an der Kante ein Innenwinkel vor, der kleiner als 150°, bevorzugt kleiner als 120°, besonders bevorzugt kleiner als 90° oder grösser als 210°, bevorzugt grösser als 240°, besonders bevorzugt grösser als 270° ist. Der Innenwinkel ist dabei der Winkel zwischen den beiden genannten Tangentialebenen der beiden Flächen bzw. Flächenteile, also der Winkel zwischen den Normalenvektoren dieser Tangentialebenen. Eine oder mehrere Kanten des Schleifkorns können scharf, insbesondere spitz, oder auch abgerundet oder abgeflacht sein. Insbesondere können eine oder mehrere Kanten eine Fase aufweisen.

Ein Punkt der Oberfläche des geformten Schleifkorns wird als Ecke verstanden, wenn ein imaginärer Konus gedanklich derart über einen Teil des Schleifkorns gestülpt werden kann, dass dieser Teil des Schleifkorns im Inneren des Konus liegt und der Punkt die Spitze des Konus bildet. Bevorzugt beträgt der Öffnungswinkel des Konus weniger als 150°, weiter bevorzugt weniger als 120° und besonders bevorzugt weniger als 90°. Eine oder mehrere Ecken des Schleifkorns können scharf, insbesondere spitz, oder auch abgerundet oder abgeflacht sein.

Beispiele für geometrische Körper, die sich für geformte Schleifkörner eignen, sind Polyeder, zum Beispiel Tetraeder, Pentaeder, Hexaeder und andere. Der geometrische Körper des geformten Schleifkorns kann insbesondere ein Quader, ein Prisma, eine Pyramide oder dergleichen sein.

In einer Ausführungsform weist das geformte Schleifkorn zumindest eine Grundfläche auf, die mehreckig, zum Beispiel dreieckig oder viereckig, insbesondere rechteckig oder quadratisch, sternförmig, polygon, insbesondere isogon, oder teilweise eckig und teilweise gekrümmt, zum Beispiel rund oder oval gekrümmt, sein kann. Bei einer Grundfläche mit mehreren Ecken können eine oder mehrere Seitenkanten gerade oder gekrümmt sein. Der geometrische Körper weist außerdem insbesondere zumindest eine Seitenfläche auf. Der geometrische Körper kann insbesondere eine Grundfläche und mehrere Seitenflächen sowie zumindest eine Spitze aufweisen. Ein derartiges Schleifkorn kann nach Art einer Pyramide geformt sein. Die zumindest eine Seitenfläche kann eine Mantelfläche bilden. Alternativ oder zusätzlich kann der geometrische Körper des geformten Schleifkorns zumindest eine Deckfläche aufweisen, die mehreckig, zum Beispiel dreieckig oder viereckig, insbesondere rechteckig oder quadratisch, sternförmig, polygon, insbesondere isogon, oder teilweise eckig und teilweise gekrümmt, zum Beispiel rund oder oval gekrümmt, sein kann. Bei einer Deckfläche mit mehreren Ecken können eine oder mehrere Seitenkanten gerade oder gekrümmt sein. Die zumindest eine Deckfläche und die zumindest eine Grundfläche können die gleiche geometrische Form oder unterschiedliche geometrische Formen haben. Die Deckfläche und die Grundfläche können im Wesentlichen parallel zueinander angeordnet sein. Sie können jedoch auch winklig zueinander angeordnet sein. Der Flächeninhalt der Grundfläche und der Deckfläche kann im Wesentlichen gleich groß oder verschieden groß sein. Die zumindest eine Deckfläche kann mit der Grundfläche über zumindest eine Seitenfläche verbunden sein. Dabei kann die zumindest eine Seitenfläche eine Mantelfläche zwischen der Grundfläche und der Deckfläche bilden. Wird die Grundfläche und die Deckfläche von je einem Vieleck mit einer Anzahl n an Ecken gebildet, so kann das geformte Schleifkorn zum Beispiel n Seitenflächen aufweisen. Der geometrische Körper kann nach Art eines Prismas mit einer Grundfläche und einer Deckfläche sowie mehreren Seitenflächen geformt sein. Ferner kann der geometrische Körper mit einer Grundfläche und einer Deckfläche sowie mehreren Seitenflächen auch nach Art eines Pyramidenstumpfes geformt sein. Die zumindest eine Grundfläche und/oder Deckfläche kann zum Beispiel durch ein gleichseitiges und gleichwinkliges Vieleck, insbesondere ein gleichseitiges und gleichwinkliges Dreieck oder Viereck, gebildet sein. Alternativ kann die zumindest eine Grundfläche auch von einem nicht gleichseitigen Vieleck gebildet sein. Ferner eignen sich gerade oder schiefe geometrische Körper. So kann das geformte Schleifkorn zum Beispiel ein gerades oder schiefes Prisma, eine gerade oder schiefe Pyramide oder dergleichen sein.

Weist der geometrische Körper des geformten Schleifkorns zumindest eine Grundfläche, zumindest eine Deckfläche und eine oder mehrere Seitenfläche auf, so ist der Körper des Schleifkorns vorzugsweise flach ausgebildet. Als ein flacher geometrischer Körper wird ein Körper angesehen, dessen zumindest eine Grundfläche und/oder Deckfläche eine, insbesondere maximale Erstreckung aufweist, die um ein Vielfaches größer als eine, insbesondere maximale Erstreckung zwischen der Grundfläche und der Deckfläche entlang der einen oder mehreren Seitenflächen ist. Die Erstreckung der Grundfläche und/oder Deckfläche kann zum Beispiel von einer Länge einer Seitenkante der Grundfläche und/oder Deckfläche definiert sein. Die Erstreckung zwischen der Grundfläche und der Deckfläche entlang einer Seitenfläche kann von einer Dicke des Körpers definiert sein. So kann das Verhältnis von Erstreckung der Grundfläche und/oder Deckfläche zu Erstreckung zwischen Grundfläche und Deckfläche des geometrischen Körpers zum Beispiel in einem Bereich von 2 bis 10, insbesondere in einem Bereich von 2 bis 5 betragen. So beträgt zum Beispiel das Verhältnis von Seitenkantenlänge zu Dicke des geometrischen Körpers von 2 bis 10, insbesondere von 2 bis 5.

Das geformte Schleifkorn von definierter Geometrie kann auch durch eine beliebige dreidimensionale Form gebildet sein, die reproduzierbar hergestellt werden kann. Unter einer beliebigen dreidimensionalen reproduzierbaren Form soll eine Form verstanden werden, bei der in freier Form mehrere Flächen zusammen einen dreidimensionalen Körper bilden.

In einer Ausführungsform kann die definierte dreidimensionale Form des keramischen Schleifkorns ein regelmäßiges dreiseitiges gerades Prisma sein. Das keramische Schleifkorn weist dabei eine Grundfläche und eine Deckfläche auf, die jeweils von drei gleich langen Seitenkanten gebildet werden. Dabei sind die Grundfläche und die Deckfläche im Wesentlichen gleich groß. Die Grundfläche und die Deckfläche sind im Wesentlichen parallel zueinander angeordnet. Die Grundfläche und die Deckfläche sind durch drei im Wesentlichen gleiche Seitenflächen voneinander beabstandet, welche eine Mantelfläche des Prismas bilden. Das regelmäßige dreiseitige gerade Prisma ist insbesondere flach ausgebildet. Das Verhältnis von Seitenkantenlänge zu Dicke des Prismas liegt zum Beispiel in einem Bereich von 2 bis 10, insbesondere in einem Bereich von 2 bis 5, ganz insbesondere in einem Bereich von 2,75 bis 4,75.

Das erfindungsgemässe Schleifkorn kann eine Grösse im gesamten Grössenbereich aufweisen, der auch für herkömmliche Schleifkörner üblich ist. Üblicherweise führen Schleifkörner mit grösseren Grössen zu einem höheren Materialabtrag von einer bearbeiteten Oberfläche als kleinere Schleifkörner. Beispielsweise kann das Schleifkorn eine Grösse im Bereich von 100 µm bis 2000 µm haben. Diese Größe kann experimentell mit Hilfe eines Mikroskops bestimmt werden. Sie wird verstanden als der Durchmesser eines Hüllkreises des mikroskopierten Bildes des Schleifkorns, also als der kleinste Durchmesser eines Kreises, der das Bild umschliesst. Alternativ kann die Größe auch als ein mittlerer Durchmesser des Schleifkorns verstanden werden. Der mittlere Durchmesser ergibt sich dabei als derjenige Durchmesser, der der gemittelten Entfernung aller Punkte auf der Oberfläche des Schleifkorns von dem Zentrum des Durchmessers, insbesondere des geometrischen Mittelpunkts des Schleifkorns, entspricht.

Es sei angemerkt, dass von Schleifkörner mit einer Grundfläche in Form eines Dreiecks, insbesondere eines gleichseitigen Dreiecks, vermutet wird, dass sich beim elektrostatischen Streuen derartiger Schleifkörner etwa ein bis zwei Drittel so orientieren, dass eine Spitze von der Unterlagen weg weist, während sich weitere Schleifkörner so orientieren, dass die Spitze auf die Unterlage zu weist. Vorteilhafte Schleifeigenschaften eines mit den Schleifkörnern bestreuten Schleifartikels sind die Folge.

Als Ausgangsstoff für die Herstellung des erfindungsgemäßen keramischen Schleifkorns kann in einer Ausführungsform alpha-Al₂O₃ verwendet. Alpha-Al₂O₃ ist dem Fachmann an sich bekannt und im Handel, zum Beispiel in Pulverform, erhältlich. Insbesondere eignet sich das Schlicker-Verfahren für die Herstellung der erfindungsgemäßen Schleifkörner. Insbesondere kann im Rahmen der vorliegenden Erfindung von alpha-Al₂O₃ selbst als Ausgangsstoff ausgegangen werden. Alternativ eignet sich auch das Sol-Gel-Verfahren für die Herstellung der erfindungsgemäßen Schleifkörner.

Allgemein wird davon ausgegangen, dass Schleifkörner mit definierter Form in vielerlei Hinsicht verbesserte Eigenschaften aufweisen: Haben die Schleifkörner bereits zum Beginn ihrer Herstellung eine definierte Form und Größe, so entfällt ein anschließender Sortierschritt, mit dem die Schleifkörner ansonsten in verschiedene Größen aufgeteilt werden müssten. Zudem bleiben die Formen und Größen auch zwischen verschiedenen Produktionschargen nahezu unverändert, was die Schleifeigenschaften sehr gut reproduzierbar macht. Des Weiteren bewirken geformte Schleifkörner typischerweise einen erhöhten Gesamtabtrag, weisen eine längere Lebensdauer auf, bewirken eine gesteigerte Oberflächengüte der bearbeiteten Oberfläche und/oder bewirken ein besser reproduzierbares Schleifergebnis.

Erfindungsgemäß weist das geformte keramische Schleifkorn zumindest ein Strukturschwächungselement, bevorzugt mehrere Strukturschwächungselemente, auf. Unter einem Strukturschwächungselement ist insbesondere eine dem geformten Schleifkorn gezielt und reproduzierbar zugeordnete Materialschwächung zu verstehen, die eine positive Wirkung auf die von dem geformten Schleifkorn bewirkte Schleifleistung hat. Das zumindest eine Strukturschwächungselement bewirkt insbesondere eine signifikante Erhöhung der Schleifleistung des Schleifkorns. Insbesondere bewirkt das zumindest eine Strukturschwächungselement eine signifikante Erhöhung der initialen sowie der mittelfristigen und/oder langfristigen Schleifleistung des Schleifkorns.

Es wird davon ausgegangen, dass beim Schleifen eines Werkstücks ein Schleifkorn des verwendeten Schleifartikels zunächst brechen muss, um an der Bruchstelle zumindest eine scharfe Kante, insbesondere die Bruchkante, auszubilden. Typischerweise erfolgt ein derartiger Bruch an der schwächsten Stelle im Material des Schleifkorns. Ausgehend von geformten Schleifkörner des Standes der Technik befindet sich diese schwächste Stelle im Material an einer undefinierten und vor allem unreproduzierbaren Stelle im oder am Schleifkorn, sodass jedes Schleifkorn eines Schleifartikels des Standes der Technik prinzipiell an unterschiedlicher Stelle bricht. In einer Vielzahl von Schriften im Stand der Technik kann jedoch beobachtet werden, dass das Schleifkorn an einer schwächsten Stelle bricht, die sich ungefähr mittig oder zentral im geformten Schleifkorn befindet. Nachteilig bei derartigen geformten Schleifkörnern, bei denen sich die schwächste Stelle - und damit die Bruchstelle - ungefähr mittig oder zentral im Schleifkorn befindet, ist, dass nach Bruch des Schleifkorns unnötig viel Material des geformten Schleifkorns verloren wird, da der wegbrechende Teil des Schleifkorns typischerweise nicht mehr an der Schleifscheibe gebunden ist und während des Schleifvorgangs wegfliegt. Dieses verlorene Material könnte - bei gezielt und reproduzierbar eingebrachter Bruchstelle - deutlich länger schleifen und somit die Lebensdauer des Schleifartikels erhöhen. Erfindungsgemäß bewirkt die Einbringung zumindest eines gezielt und reproduzierbar eingebrachten Strukturschwächungselements eine vorteilhafte Verschiebung dieser Bruchstelle. Folglich wird erfindungsgemäß mittels Zuordnung des zumindest einen gezielt und reproduzierbar eingebrachten Strukturschwächungselements eine definierte schwächste Stelle im oder am Material vorgesehen, an der das Schleifkorn typischerweise am Anfang eines Schleifvorganges bricht. Auf diese Weise ist es möglich, die vorteilhaften und erwünschten scharfen Kanten des Schleifkorns zu bewirken, ohne einen Großteil des Materials des Schleifkorns zu verlieren. Durch Erhalt des Großteils des Materials, welches im weiteren Verlauf eines Schleifvorganges für weitere Brüche zur Verfügung steht und somit erneut scharfe Kanten ausbilden kann, wird eine verlängerte Lebensdauer bei gleichbleibend hoher Schleifleistung des Schleifkorns bewirkt. Insbesondere weisen die Schleifkörner eine längere Lebensdauer auf, da von den Schleifkörnern während des Schleifens mehrfach kleine Stücke abbrechen können, so dass sich neue Schneidekanten und Schneidflächen ergeben. Die Schleifkörner schärfen sich hierdurch selbst.

Erfindungsgemäß ist das zumindest eine Strukturschwächungselement als eine offene oder geschlossene Materialaussparung im Schleifkorn realisiert. Unter einer offenen Materialaussparung im Schleifkorn ist insbesondere eine Delle, eine Kerbe, eine Mulde, ein Krater oder dergleichen zu verstehen, d.h. eine sich bis an die Oberfläche des Schleifkorns erstreckende und somit zu der Umgebung des Schleifkorns hin offene Materialaussparung. Insbesondere befindet sich die offene Materialaussparung zumindest teilweise im Inneren des Materials. Insbesondere ist die offene Materialaussparung von außen visuell sichtbar. Unter einer geschlossenen Materialaussparung ist hingegen eine von dem Material des Schleifkorns im Wesentlichen umschlossene Materialaussparung zu verstehen, d.h. beispielsweise ein Hohlraum, eine Blase, eine Pore, ein Lunker oder dergleichen. Unter "im Wesentlichen umschlossen" soll verstanden werden, dass die Materialaussparung prinzipiell auch eine oder mehrere kleine Öffnungen haben kann, die sich ggf. bis zur Oberfläche des Schleifkorns erstrecken können - die Materialaussparung also nicht vollständig von der umschließenden Struktur umgeben ist -, wobei jedoch die Größe der Öffnung im Verhältnis zur Materialaussparung vernachlässigbar ist. Beispielsweise wird eine im Schleifkorn befindliche Blase, von der sich aus eine Mikrokapillare mit vergleichsweise kleinem Durchmesser bis an die Oberfläche des Schleifkorns erstreckt, als eine im Wesentlichen umschlossene Materialaussparung des geformten Schleifkorns verstanden. Eine derartige geschlossene Materialaussparung befindet sich vollständig im Schleifkorn und ist von außen visuell unsichtbar.

Die Existenz von erfindungsgemäßen Materialaussparungen scheint, nach derzeitigen Erkenntnissen, die die Materialaussparung umliegende oder umschließende Struktur des geformten keramischen Schleifkorns zu beeinflussen. Insbesondere scheint ein Einfluss auf eine Festigkeit oder Elastizität der die Materialaussparung umliegende oder umschließende Struktur des geformten keramischen Schleifkorns beeinflusst zu sein. Folglich kann bei gezielter Zuordnung, insbesondere Einbringung, derartiger offener oder geschlossener Materialaussparungen zu dem Schleifkorn eine physikalische Eigenschaft des Schleifkorns bewusst beeinflusst und/oder gesteuert werden. Insbesondere kann derart eine Festigkeit oder Zähigkeit oder Elastizität der die Materialaussparung umliegenden oder umschließenden Struktur des geformten keramischen Schleifkorns bewusst beeinflusst und/oder gesteuert werden und folglich auch die Brucheigenschaften des geformten Schleifkorns bewusst beeinflusst und/oder gesteuert werden. Ferner wurde gefunden, dass offene Materialaussparungen die Schleifleistung auf Grund eines häufigeren Vorhandseins von scharfen Spitzen und/oder scharfen Ecken erhöhen.

In einer Ausführungsform des erfindungsgemäßen Schleifkorns weist das zumindest eine Strukturschwächungselement eine Mehrzahl von als offene Materialaussparungen oder als geschlossene Materialaussparungen ausgeformten Strukturschwächungselementen auf. Insbesondere weist das Schleifkorn 2 bis 100, bevorzugt 2 bis 10, besonders bevorzugt von 2 bis 3, von als offene oder geschlossene Materialaussparungen ausgeformte Strukturschwächungselemente auf. Auf diese Weise können vorteilhaft mehrere Schwachstellen und somit potentielle Bruchstellen, an denen während eines Schleifvorgangs durch Bruch des Schleifkorns scharfe Kanten entstehen können, in dem geformten Schleifkorn vorgesehen sein. In einer Ausführungsform weisen die Strukturschwächungselemente einen mittleren Abstand zueinander auf, der zwischen 5 % und 95 %, insbesondere zwischen 60 % und 80 %, des mittleren Durchmessers des Schleifkorns beträgt. In einer Ausführungsform weisen die Strukturschwächungselemente einen mittleren Abstand zueinander auf, der zwischen 80 µm und 120 µm beträgt. Ferner wurde gefunden, dass mit zunehmender Anzahl an offenen Materialaussparungen die Materialstärke des Schleifkorns im Mittel abnimmt und somit eine erhöhte Bruchtendenz bewirkt werden kann.

In einer Ausführungsform des erfindungsgemäßen Schleifkorns ist das zumindest eine Strukturschwächungselement exzentrisch zum Schwerpunkt des Schleifkorns ausgebildet. Derart kann bewirkt werden, dass die schwächste Stelle im Material, d.h. die wahrscheinlichste Bruchstelle des Schleifkorns, sich nicht im Schwerpunkt und damit zentral oder mittig im Schleifkorn befindet. Insbesondere kann die schwächste Stelle im Material derart vorteilhaft in einen weiter außen im Schleifkorn liegenden Bereich verlagert sein. Somit kann nach derzeitigen Erkenntnissen bewirkt werden, dass nach Bruch des Schleifkorns noch verhältnismäßig große Reststücke (Restmaterial) des Schleifkorns verbleiben, die während eines Schleifvorgangs erneut brechen können und somit weitere, neue und daher insbesondere scharfe Schneidekanten hervorbringen können. Im Falle von einer Mehrzahl von als offene Materialaussparungen oder als geschlossene Materialaussparungen ausgeformten Strukturschwächungselementen ist eine exzentrische Anordnung insbesondere derart zu verstehen, dass der geometrischer Mittelpunkt oder Schwerpunkt der Mehrzahl der Strukturschwächungselemente exzentrisch zum Schwerpunkt des Schleifkorns positioniert ist.

In einer Ausführungsform des erfindungsgemäßen Schleifkorns ist das zumindest eine, als offene Materialaussparung ausgebildete, Strukturschwächungselement auf einer der zumindest drei Flächen, auf der zumindest einen Kante oder auf der zumindest einen Ecke des Schleifkorns ausgebildet. Derart kann ein Schleifkorn mit einem sehr exzentrisch angeordneten Strukturschwächungselement realisiert werden, bei dem die potentielle Bruchstelle weit entfernt vom Schwerpunkt liegt. Nach derzeitigen Erkenntnissen erfolgt bei erfindungsgemäßem Schleifkorn bei einem Brechen des Schleifkorns der Bruch vorteilhaft derart, dass nur ein verhältnismäßig kleines Bruchstück von dem Schleifkorn abbricht. Das verbleibende Schleifkorn weist dabei eine scharfe Schleifkante auf. Ferner kann das verbleibende, noch verhältnismäßig große Schleifkorn, insbesondere mehrfach, erneut brechen und somit auch beim weiteren Verlauf eines Schleifvorgangs weitere scharfe Kanten ausbilden. Insbesondere kann folglich eine besonders gute und langfristig hohe Schleifleistung bewirkt werden. Ferner kann das Strukturschwächungselement auf besonders einfache Weise realisiert werden, insbesondere beispielsweise bereits durch den Formgebungsprozess bei der Herstellung des Schleifkorns durch eine entsprechend ausgeformte Gießform.

In einer Ausführungsform des erfindungsgemäßen Schleifkorns weist das zumindest eine, als geschlossene Materialaussparung ausgebildete Strukturschwächungselement einen Abstand zu einer der zumindest drei Flächen oder zu der zumindest einen Kante oder zu der zumindest einen Ecke des Schleifkorns auf, der zwischen 1 % und 50 % des mittleren Durchmessers des Schleifkorns beträgt, insbesondere zwischen 5 % und 40 %. In einer Ausführungsform des erfindungsgemäßen Schleifkorns weist das zumindest eine, als geschlossene Materialaussparung ausgebildete Strukturschwächungselement einen Abstand zu einer der zumindest drei Flächen oder zu der zumindest einen Kante oder zu der zumindest einen Ecke des Schleifkorns auf, der zwischen 5 µm und 500 µm beträgt, bevorzugt zwischen 5 µm und 100 µm beträgt, besonders bevorzugt zwischen 5 µm und 30 µm beträgt. Auf diese Weise kann realisiert sein, dass das als geschlossene Materialaussparung ausgebildete Strukturschwächungselement des Schleifkorns sehr exzentrisch angeordnet ist. Insbesondere kann eine potentielle Bruchstelle weit entfernt vom Schwerpunkt und somit besonders exzentrisch im Schleifkorn positioniert werden. Nach derzeitigen Erkenntnissen erfolgt bei erfindungsgemäßem Schleifkorn bei einem Brechen des Schleifkorns der Bruch vorteilhaft derart, dass nur ein verhältnismäßig kleines Bruchstück von dem Schleifkorn abbricht. Das verbleibende Schleifkorn weist dabei eine scharfe Schleifkante auf. Ferner kann das verbleibende, noch verhältnismäßig große Schleifkorn, insbesondere mehrfach, erneut brechen und somit auch beim weiteren Verlauf eines Schleifvorgangs weitere scharfe Kanten ausbilden. Insbesondere kann folglich eine besonders gute und langfristig hohe Schleifleistung bewirkt werden.

Erfindungsgemäß weist das zumindest eine Strukturschwächungselement eine im Wesentlichen konvex gekrümmte, insbesondere sphärische, bevorzugt kugelförmige, Gestalt auf. Erfindungsgemäß weist die konvex gekrümmte, insbesondere sphärische, bevorzugt kugelförmige, Gestalt einen Krümmungsradius von 10 µm bis 200 µm auf, bevorzugt von 25 µm bis 175 µm, besonders bevorzugt von 25 µm bis 50 µm. In einer Ausführungsform des erfindungsgemäßen Schleifkorns weist das zumindest eine Strukturschwächungselement eine im Wesentlichen konvex gekrümmte, insbesondere sphärische, bevorzugt kugelförmige, Gestalt auf mit einem Radius R auf, wobei ein Verhältnis von R zur Dicke D des Schleifkorns zwischen ungefähr 0,05 und 2, bevorzugt zwischen ungefähr 0,1 und 1, besonders bevorzugt zwischen ungefähr 0,2 und 0,5 beträgt.

Eine konvex gekrümmte Form der Materialaussparung stellt dabei eine besonders einfache und daher auch besonders reproduzierbare Realisierung der Materialaussparung und somit des Strukturschwächungselements dar. Eine zuverlässige und reproduzierbare Bruchwirkung kann erzielt werden. Ferner wurde gefunden, dass eine Kraftverteilung an einer sphärisch, bevorzugt kugelförmig, ausgestalteten Materialaussparung zu einer besonders reproduzierbaren Bruchstelle des geformten Schleifkorns führt.

In einer Ausführungsform des erfindungsgemäßen Schleifkorns ist das zumindest eine Strukturschwächungselement als ein Materialüberstand und/oder Materialüberhang an der zumindest einen Kante und/oder an der zumindest einen Ecke des Schleifkorns realisiert. Unter einem Materialüberstand und/oder Materialüberhang ist insbesondere ein die spezifische Geometrie des Schleifkorns zusätzlich ergänzendes Material, insbesondere die spezifische Geometrie des Schleifkorns erweiterndes Material, zu verstehen. Dabei wird das die spezifische Geometrie des Schleifkorns zusätzlich ergänzende Material gezielt und reproduzierbar an dem Schleifkorn vorgesehen. Insbesondere handelt es sich dabei nicht um Relikte oder Artefakte eines unpräzisen Fertigungsprozesses, sondern um speziell vorgesehene Strukturschwächungselemente. Die Existenz von erfindungsgemäßen Materialüberständen und/oder Materialüberhängen scheint, nach derzeitigen Erkenntnissen, einen vorteilhaften Einfluss auf die Festigkeit oder Zähigkeit oder Elastizität des Schleifkorns zu haben, der ein gezieltes Brechen des Schleifkorns fördert. Folglich kann bei gezielter Zuordnung eines derartigen Materialüberstands und/oder Materialüberhangs zu dem Schleifkorn eine Bruchanfälligkeit oder Bruchtendenz des Schleifkorns bewusst beeinflusst und/oder gesteuert werden. Nach derzeitigen Erkenntnissen scheint der Einfluss auszugehen von einer - erfindungsgemäß bewusst ausnutzbaren - Kräfteverteilung und/oder Drehmomentverteilung, die bei einem Schleifvorgang auf ein jeweiliges Schleifkorn wirkt. Insbesondere wird vermutet, dass durch Vorsehen eines erfindungsgemäßen Materialüberstands und/oder Materialüberhangs eine auf das Schleifkorn wirkende Kraft, insbesondere ein auf das Schleifkorn wirkendes Drehmoment oder eine Hebelwirkung, variiert und vorteilhaft eingestellt werden kann. Eine reproduzierbare Bruchwirkung, d.h. Bruchanfälligkeit oder Bruchtendenz, ist die Folge. Folglich kann derart erfindungsgemäß die Brucheigenschaft des geformten Schleifkorns bewusst beeinflusst und/oder gesteuert werden.

Ferner sei angemerkt, dass neben einer vorteilhaften Beeinflussung der Brucheigenschaft des geformten Schleifkorns auch eine Haftungseigenschaft des Schleifkorns auf einer Schleifartikelunterlage verbessert wird. Durch Ausbildung des Materialüberstands und/oder Materialüberhangs werden die spezifische geometrische Form des Schleifkorns ergänzende Vorsprünge und/oder Hinterschneidungen erzeugt, die von einem Binder umflossen und/oder benetzt werden können und somit der Verbesserung der Hafteigenschaft dienen.

In einer Ausführungsform, in der das Schleifkorn beispielsweise als regelmäßiges dreiseitiges gerades Prisma realisiert ist, bei dem eine Grundfläche und eine Deckfläche im Wesentlichen parallel zueinander angeordnet und durch drei Seitenflächen voneinander beabstandet sind, kann das Strukturschwächungselement beispielsweise als die Deckfläche zumindest im Bereich zumindest einer von der Deckfläche gebildeten Ecke im Wesentlichen in Richtung der Ebene der Deckfläche über die Seitenflächen hinaus überragender Materialüberstand und/oder Materialüberhang realisiert sein. Dabei steht das zusätzliche Material zumindest an einer Kante und an einer Ecke über das restliche Material des Schleifkorns hinaus. Insbesondere stellt das Strukturschwächungselement derart einen pilzförmigen Materialüberstand und/oder Materialüberhang dar, da das Schleifkorn in einer Seitenansicht ähnlich einer Pilzform zur Deckfläche hin übersteht.

In einer Ausführungsform des erfindungsgemäßen Schleifkorns ist der Materialüberstand und/oder der Materialüberhang entlang zumindest 10 %, bevorzugt zumindest 30 %, besonders bevorzugt zumindest 90 % der Länge der zumindest einen Kante realisiert. Die Länge des Materialüberstands, gemessen an der Länge einer Kante, über die der Materialüberstand und/oder der Materialüberhang hinaussteht, scheint nach derzeitigen Erkenntnissen einen großen Einfluss auf die physikalische Kräfteverteilung zu haben, die bei einem Schleifvorgang auf ein Schleifkorn wirkt. Mit zunehmender Länge kann mit einer zunehmenden Hebelwirkung gerechnet werden, die die Brucheigenschaft des Schleifkorns signifikant beeinflusst. Es wurde gefunden, dass insbesondere auch kleine Materialüberstande, die lediglich geringe Anteile einer Kante überragen, beispielsweise 5-25 %, weisen bereits einen großen Einfluss auf.

In einer Ausführungsform des erfindungsgemäßen Schleifkorns weist der Materialüberstand und/oder der Materialüberhang eine Dicke von ungefähr 10 µm bis 100 µm, bevorzugt von 10 µm bis 50 µm, besonders bevorzugt von 10 µm bis 30 µm, auf. Ähnlich wie die Länge, auf der der Materialüberstand und/oder der Materialüberhang übersteht, hat nach derzeitigen Erkenntnissen auch die Dicke des überstehenden Materialüberstands und/oder Materialüberhangs einen signifikanten Einfluss auf die physikalische Kräfteverteilung, die bei einem Schleifvorgang auf ein Schleifkorn wirkt. Mit abnehmender Dicke kann mit einer zunehmenden Bruchtendenz des Materialüberstands und/oder des Materialüberhangs selbst gerechnet werden, während mit zunehmender Dicke auf Grund einer verstärkten Hebelwirkung an dem Schleifkorn mit einer zunehmenden Bruchtendenz des gesamten Schleifkorns gerechnet werden kann. Insbesondere bewirkt der Materialüberstand dann eine nötige Kraft und/oder ein nötiges Drehmoment zum Brechen des Schleifkorns. Es ist möglich, dass der Materialüberstand eine geringere Festigkeit aufweist als das restliche Schleifkorn, sodass der Materialüberstand auch schon bei geringen Belastungen (beispielsweise einem Schleifen mit geringem Anpressdruck) brechen und somit eine scharfe Kante bilden kann. In einer beispielhaften Ausführungsform wird die Dicke zu 20 µm gewählt, wobei der Wert einen vorteilhaften Kompromiss aus den beiden zuvor genannten Effekten darstellt.

Ferner wurde gefunden, dass ein besonders dünner Materialüberstand selbst eine sehr scharfe Schneidkante darstellen kann und somit ebenfalls, ungeachtet eines Einflusses auf die Brucheigenschaften des Schleifkorns, die Schleifleistung des Schleifkorns erhöht.

In einer Ausführungsform des erfindungsgemäßen Schleifkorns erstreckt sich der Materialüberstand und/oder der Materialüberhang über eine Entfernung von zumindest 20 µm, bevorzugt von zumindest 50 µm, besonders bevorzugt von zumindest 100 µm, über zumindest eine Kante hinaus. Ähnlich wie die Länge, auf der der Materialüberstand und/oder der Materialüberhang übersteht, und die Dicke, die der Materialüberstand und/oder der Materialüberhang aufweist, hat nach derzeitigen Erkenntnissen auch die Entfernung, über die sich der Materialüberstand und/oder der Materialüberhang über zumindest eine Kante des Schleifkorns hinaus erstreckt. Mit zunehmender Entfernung kann mit einer zunehmenden Bruchtendenz des Materialüberstands und/oder des Materialüberhangs selbst gerechnet werden, während mit abnehmender Entfernung mit einer zunehmenden Bruchtendenz des gesamten Schleifkorns gerechnet werden kann. Insbesondere bewirkt der Materialüberstand dann eine nötige Kraft und/oder ein nötiges Drehmoment zum Brechen des Schleifkorns. In einer beispielhaften Ausführungsform wird die Entfernung, über die sich der Materialüberstand und/oder der Materialüberhang über zumindest eine Kante des Schleifkorns hinaus erstreckt, zu 50 µm gewählt, wobei der Wert einen Kompromiss aus den beiden zuvor genannten Effekten darstellt.

In einer Ausführungsform des erfindungsgemäßen Schleifkorns schließt der Materialüberstand und/oder der Materialüberhang zu zumindest einer der zumindest drei Flächen einen Winkel zwischen 10° und 90°, bevorzugt zwischen 20° und 80°, ein. Insbesondere kann der Winkel durch einen gekrümmten, insbesondere kontinuierlichen, Übergang zwischen dem Materialüberstand und/oder dem Materialüberhang und der zumindest einen der zumindest drei Flächen realisiert sein. Dabei kann der gekrümmte, insbesondere kontinuierliche, Übergang durch einen Krümmungsradius beschreibbar sein. Der Krümmungsradius kann insbesondere zumindest 25 µm, bevorzugt zumindest 50 µm, besonders bevorzugt zumindest 100 µm betragen. In einer beispielhaften Ausführungsform weist der Krümmungsradius einen Wert von 70 µm auf.

In einer Ausführungsform ist vorgesehen, dass das geformte keramische Schleifkorn auf Basis von alpha-Al₂O₃ einen Anteil an ZrO₂ von 15 Gew.% bis 30 Gew.% enthält. In einer Ausführungsform weist das alpha-Al₂O₃ eine mittlere Kristallitkorngröße von 0,5 µm bis 3 µm, vorzugsweise von 0,6 µm bis 2 µm, auf, und das ZrO₂ eine mittlere Kristallitkorngröße von 0,25 µm bis 8 µm, vorzugsweise von 0,3 µm bis 1,5 µm. Insbesondere ist das ZrO₂ mit einem Anteil von 10 Gew.% bis 25 Gew.%, ganz insbesondere von 15 Gew.% bis 22 Gew.%, enthalten. Als Ausgangsstoff für die Herstellung des erfindungsgemäßen keramischen Schleifkorns wird ferner ZrO₂ verwendet. ZrO₂ ist dem Fachmann ebenfalls an sich bekannt und im Handel, zum Beispiel in Pulverform, erhältlich. Es wurde gefunden, dass sich ein erhöhter Anteil an ZrO₂ auf die Schleifleistung von Schleifartikeln, die mit den erfindungsgemäßen Schleifkörnern bestückt sind, vorteilhaft auswirkt. Es wird vermutet, dass durch den erhöhten Anteil an ZrO₂ ein kontinuierlicher, mikrokristalliner Abbau der Schleifkörner erreicht wird, der fortlaufend neue und scharfe Schneidkanten freisetzt. Ein erhöhter Anteil an ZrO₂ könnte mit einer erhöhten Anzahl an Schwachstellen im Gefüge der Schleifkörner verbunden sein, die sich positiv auf die Schleifeigenschaften der Schleifkörner auswirken. Ein Schleifkorn mit einem Anteil an alpha-Al₂O₃ und ZrO₂ wird auch als zweiphasiges Schleifkorn bezeichnet. Unter einer mittleren Kristallitkorngröße wird hier die Korngröße des alpha-Al₂O₃- bzw. ZrO₂-Kristallitkorns in dem geformten keramischen Schleifkorn verstanden. Dabei bedeutet eine mittlere Kristallitkorngröße, dass ein Mittelwert aus einer bestimmten Anzahl an Messwerten für die Kristallitkorngröße gebildet wird. Die Kristallitkorngröße kann mittels an sich bekannter Verfahren, wie zum Beispiel REM- oder XRD-Analyse, bestimmt werden. Zum Beispiel können die Abbildungen einer REM-Analyse mit Hilfe des Linienschnittverfahrens ausgewertet werden. Das Linienschnittverfahren (auch als Linienverfahren bezeichnet) ist dem Fachmann aus der Gefügeanalyse an sich bekannt. Dabei wird für die Bestimmung der Korngröße ein Mittelwert aller gemessenen Schnittsegmentlängen gebildet. Gegebenenfalls kann bei der Ermittlung des Mittelwerts noch ein Korrekturfaktor berücksichtigt werden.

Die Erfindung bezieht sich ferner auf einen Schleifartikel, welcher erfindungsgemäße geformte keramische Schleifkörner aufweist, d.h. Schleifkörner, die zumindest ein Strukturschwächungselement aufweisen.

In einer Variante des Schleifartikels sind neben den erfindungsgemäßen geformten keramischen Schleifkörnern auch geformte Schleifkörner ohne zumindest ein Strukturschwächungselement und/oder nicht geformte, insbesondere gebrochene, Schleifkörner und/oder teilweise geformte Schleifkörner enthalten. Diese Schleifkörner ohne Strukturschwächungselement und diese geformten Schleifkörner und/oder teilweise geformten Schleifkörner dienen zum Beispiel als Stützkörner. In dieser Variante des Schleifartikels beträgt der Anteil an erfindungsgemäßen geformten keramischen Schleifkörnern mit zumindest einem Strukturschwächungselement zumindest 5 %, insbesondere zumindest 15 %, bevorzugt zumindest 25 %, besonders bevorzugt zumindest 50 %, bezogen auf die Gesamtmenge an Schleifkörnern (beispielsweise ermittelbar über Gewichtsprozent). Nicht geformte keramische Schleifkörner weisen im Unterschied zu geformten keramischen Schleifkörnern keine definierte Geometrie auf. Sie weisen keine definierte dreidimensionale Form von definierter Größe auf. Bei der Herstellung derartiger Schleifkörner findet kein definierter Formgebungsprozess statt. Nicht geformte Schleifkörner sind von unregelmäßiger Gestalt und sind zufällig geformt. Sie können durch Zerkleinern, zum Beispiel durch Brechen, hergestellt werden, wobei das Zerkleinern auf zufällige Weise erfolgt, so dass die Schleifkörner von Bruchstücken gebildet sind. Derartige nicht geformte, insbesondere gebrochene Schleifkörner sind dem Fachmann hinlänglich bekannt. Ihre Herstellung ist zum Beispiel in EP 947485 A1 beschrieben. Teilweise geformte keramische Schleifkörner weisen im Unterschied zu geformten keramischen Schleifkörnern keine vollständig definierte Geometrie auf. Teilweise geformte Schleifkörner weisen im Unterschied zu nicht geformten Schleifkörnern teilweise eine definierte Geometrie mit einer teilweise definierten dreidimensionalen Form von teilweise definierter Größe auf. Zum Beispiel weisen teilweise geformte Schleifkörner zumindest eine definierte Seitenfläche, insbesondere zumindest zwei definierte Seitenflächen auf, und/oder zumindest eine definierte Kante, insbesondere zumindest zwei definierte Kanten. Teilweise geformte Schleifkörner weisen zumindest eine zufällig geformte Seitenfläche und/oder zumindest eine zufällig geformte Kante auf. Derartige Schleifkörner können beispielsweise hergestellt werden, indem zunächst eine Formgebung zu einem Vorläuferprodukt und anschließend eine Zerkleinerung des Vorläuferprodukts erfolgt. So kann zum Beispiel zunächst eine Schicht mit zwei im Wesentlichen planparallelen Seitenflächen geformt werden. Diese Schicht kann anschließend in zufälliger Weise zerkleinert werden, wodurch unregelmäßig geformte Bruchkanten entstehen. Derartige teilweise geformte Schleifkörner sind beispielsweise beschrieben in DE 102015108812 A1.

Es wurde gefunden, dass ein Schleifartikel mit einer Mischung aus Schleifkörner mit zumindest einem Strukturschwächungselement und Schleifkörner ohne zumindest ein Strukturschwächungselement ebenfalls eine erhöhte Schleifleistung liefert. Ein solcher Schleifartikel hat gegenüber einem Schleifartikel, bei dem lediglich Schleifkörner mit zumindest einem Strukturschwächungselement vorhanden sind, den Vorteil, dass der Schleifartikel kostengünstiger ist.

Bei dem Schleifartikel handelt es sich insbesondere um einen beschichteten Schleifartikel. Der Schleifartikel umfasst insbesondere eine flexible Unterlage mit zumindest einer Schicht, insbesondere aus Papier, Pappe, Vulkanfiber, Schaumstoff, einem Kunststoff, einem textilen Gebilde, insbesondere einem Gewebe, Gewirke, Gestricke, Geflecht, Vlies, oder einer Kombination dieser Materialien, insbesondere Papier und Gewebe, in einer oder mehreren Schichten. Die flexible Unterlage verleiht dem Schleifartikel hinsichtlich Haftung, Dehnung, Reiss- und Zugfestigkeit, Flexibilität und Stabilität spezifische Eigenschaften.

Bei einem beschichteten Schleifartikel haften die Schleifkörner insbesondere mittels eines Grundbinders auf der flexiblen Unterlage. Mit dem Grundbinder werden die Schleifkörner insbesondere in der gewünschten Stellung und Verteilung auf der Unterlage vorfixiert. Dem Fachmann sind geeignete Grundbinder zum Anbringen von Schleifkörnern auf einer flexiblen Unterlage aus dem Stand der Technik hinlänglich bekannt. Als Grundbinder kommen insbesondere Kunstharze, wie zum Beispiel Phenolharz, Epoxidharz, Harnstoffharz, Melaminharz, Polyesterharz, in Betracht. Zusätzlich zu dem Grundbinder kann der Schleifartikel zumindest einen Deckbinder, beispielsweise zwei Deckbinder, aufweisen. Der oder die Deckbinder sind insbesondere schichtweise auf dem Grundbinder und den Schleifkörnern aufgebracht. Dabei verbindet der oder die Deckbinder die Schleifkörner fest untereinander und fest mit der Unterlage. Dem Fachmann sind ferner geeignete Deckbinder aus dem Stand der Technik hinlänglich bekannt. Als Deckbinder kommen insbesondere Kunstharze, wie zum Beispiel Phenolharz, Epoxidharz, Harnstoffharz, Melaminharz, Polyesterharz, in Betracht. Darüber hinaus können weitere Bindemittel und/oder Zusatzstoffe vorgesehen sein, um dem Schleifartikel spezifische Eigenschaften zu verleihen. Derartige Bindemittel und/oder Zusatzstoffe sind dem Fachmann geläufig.

Alternative Schleifartikel, wie zum Beispiel gebundene Schleifartikel, sind ebenfalls möglich. Bei gebundenen Schleifartikeln handelt es sich insbesondere um kunstharzgebundene Trenn- und Schruppscheiben, die dem Fachmann geläufig sind. Für kunstharzgebundene Trenn- und Schruppscheiben wird aus Schleifmineralien sowie Füllstoffen, Pulverharz und Flüssigharz eine Masse gemischt, die dann zu Trenn- und Schruppscheiben in verschiedenen Stärken und Durchmessern gepresst werden.

Der Schleifartikel kann in unterschiedlichen Konfektionsformen vorliegen, zum Beispiel als Schleifscheibe oder als Schleifband, als Bogen, Rollen oder Streifen.

Die Beschreibung bezieht sich ferner auf eine Gießform (nicht beansprucht) zum Herstellen der erfindungsgemässen Schleifkörner in einem (nicht beanspruchten) Verfahren zur Herstellung der Schleifkörner. Die Gießform zum Herstellen geformter keramischer Schleifkörner, insbesondere geformter keramischer Schleifkörner mit zumindest einem als offene Materialaussparung ausgeformten Strukturschwächungselement und/oder zur Herstellung keramischer Schleifkörner mit zumindest einem als Materialüberstand und/oder Materialüberhang ausgeformten Strukturschwächungselement, weist zumindest eine Formkavität, bevorzugt eine Vielzahl von Formkavitäten, auf, wobei die zumindest eine Formkavität eine untere Formoberfläche, eine Formseitenwand und eine Tiefe zwischen unterer Formoberfläche und Oberfläche der Gießform umfasst. In einer Ausführungsform beträgt die Tiefe ungefähr 450 µm. Die Formkavität ist dabei komplementär zur Form zumindest eine Teils der Oberfläche des Schleifkorns ausgeformt, wobei die Querschnittsgeometrie der zumindest einen Formkavität parallel zur unteren Formoberfläche im Wesentlichen aus dreieckigen, rechteckigen, sternförmigen, polygonen, insbesondere isogonen, oder anderen regelmäßigen oder unregelmäßigen vieleckigen Formen ausgewählt ist. Zur Ausformung der offenen Materialaussparung kann die Formkavität entsprechende Vorsprünge und/oder Dellen und/oder Beulen oder dergleichen aufweisen. Zur Ausformung eines Materialüberstands und/oder eines Materialüberhangs kann die Formseitenwand und die Oberfläche der Gießform durch einen Krümmungsradius von 25 µm, bevorzugt von 50 µm, besonders bevorzugt von 100 µm, verbunden sein.

Die Gießform kann beispielsweise Silikon oder andere, insbesondere thermoplastische, Kunststoffe wie thermoplastisches Polyurethan (TPU), Polyvinylchlorid (PVC) oder dergleichen enthalten oder daraus bestehen. Die Vertiefungen können eine offene Deckfläche aufweisen, durch die eine Dispersion eingefüllt werden kann.

Die Beschreibung bezieht sich außerdem auf ein Verfahren (nicht beansprucht) zur Herstellung eines geformten keramischen Schleifkorns, wobei das Schleifkorn zumindest ein Strukturschwächungselement aufweist. Das Verfahren umfasst die folgenden Schritte:
a) Herstellen eines Schlickers aus zumindest einem alpha-Al₂O₃-Pulver, insbesondere mit Zusätzen eines ZrO₂-Pulvers, und einem Dispersionsmittel, wobei in dem Schlicker ein Feststoffgehalt von 50 Gew.% bis 90 Gew.% und eine mittlere Partikelgröße von 0,1 µm bis 8 µm beträgt;
b) Einfüllen des Schlickers in Vertiefungen einer Gießform, wobei die Vertiefungen eine definierte Geometrie aufweisen;
c) Trocknen des Schlickers in den Vertiefungen zu Schleifkornvorläufern, wobei ein Feststoffgehalt der Schleifkornvorläufer von 85 Gew.% bis 99,9 Gew.% beträgt;
d) Entfernen der Schleifkornvorläufer aus den Vertiefungen;
e) Sintern der Schleifkornvorläufer zu Schleifkörnern.

Das Verfahren basiert in dieser Ausführungsform auf dem Schlicker-Verfahren. Die Herstellung der erfindungsgemäßen geformten keramischen Schleifkörner erfolgt dabei insbesondere nicht nach dem aus der Literatur hinlänglich bekannten Sol-Gel-Verfahren. Die einzelnen Verfahrensschritte sind insbesondere in DE 10 2017 207 322 A1 näher erläutert.

Es sei angemerkt, dass ein Strukturschwächungselement in Form eines Materialüberstands und/oder in Form eines Materialüberhangs auf besonders einfache Weise bereits durch den Formgebungsprozess bei der Herstellung des Schleifkorns durch eine entsprechend ausgeformte Gießform realisiert werden kann. Auch als offene Materialaussparung ausgeformte Strukturschwächungselemente können in ähnlicher, besonders einfacher Weise bereits durch den Formgebungsprozess bei der Herstellung des Schleifkorns durch eine entsprechend ausgeformte Gießform realisiert werden - beispielsweise durch in der Gießform vorgesehene Beulen.

Ferner sei angemerkt, dass ein Strukturschwächungselement in Form einer geschlossenen Materialaussparung auf besonders einfache Weise bereits durch den Formgebungsprozess bei der Herstellung des Schleifkorns durch eine entsprechend Verarbeitung und Konditionierung des Schlickers realisiert werden kann. insbesondere die Herstellparameter wie beispielsweise eine Viskosität des Schlickers, ein Benetzungsverhalten des Schlickers, die Einfüllgeschwindigkeit des Schlickers in die Formkavitäten, ein während des Einfüllens des Schlickers in die Formkavitäten herrschender Druck oder dergleichen können die Bildung von als geschlossene Materialaussparung ausgeformten Strukturschwächungselementen beeinflussen. Beispielsweise sollte für als geschlossene Materialaussparungen in Form von Luftblasen der Schlicker beim Einfüllen in die Formkavitäten nicht zu dünnflüssig sein, um das Aufsteigen von in dem in die Formkavitäten eingefüllten Schlicker befindlichen Luftblasen zu unterdrücken. Ferner kann eine Viskosität von ungefähr 0,01 Pa·s bis 5 Pa·s bei Scherrate von 100 1/s die Bildung von Luftblasen unterstützen. Ferner kann auch unterstützend wirken, wenn der Schlicker nach einem Mahlen nicht entgast worden ist (d.h. unter Unterdruck gerührt wurde).

### Zeichnungen

Die Erfindung ist anhand von in den Zeichnungen dargestellten Ausführungsbeispielen in der nachfolgenden Beschreibung näher erläutert. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Gleiche Bezugszeichen in den Figuren bezeichnen gleiche Elemente.

Es zeigen:
- Figur 1: eine schematische Ansicht einer Ausführungsform eines keramischen geformten Schleifkorns gemäß Stand der Technik;
- Figur 2: eine schematische Ansicht einer Ausführungsform eines erfindungsgemäßen keramischen geformten Schleifkorns mit zumindest einem als offene Materialaussparung ausgeformten Strukturschwächungselement;
- Figur 3: eine schematische Ansicht einer Ausführungsform eines erfindungsgemäßen keramischen geformten Schleifkorns mit zumindest einem als geschlossene Materialaussparung ausgeformten Strukturschwächungselement;
- Figur 4: eine schematische Ansicht einer Ausführungsform eines erfindungsgemäßen keramischen geformten Schleifkorns mit zumindest einem als Materialüberstand ausgeformten Strukturschwächungselement;
- Figur 5: eine schematische Ansicht einer alternativen Ausführungsform eines erfindungsgemäßen keramischen geformten Schleifkorns mit zumindest einem als Materialüberstand ausgeformten Strukturschwächungselement;
- Figur 6: eine schematische Ansicht einer Ausführungsform eines erfindungsgemäßen keramischen geformten Schleifkorns mit zumindest einem als Materialüberstand ausgeformten Strukturschwächungselement, einem als geschlossene Materialaussparung ausgeformten Strukturschwächungselement sowie einem als offene Materialaussparung ausgeformten Strukturschwächungselement;
- Figur 7: einen Ausschnitt aus einer schematischen Schnittdarstellung einer Ausführungsform des erfindungsgemäßen Schleifartikels;
- Figur 8: ein Ablaufdiagramm zur Darstellung der Verfahrensschritte zur Herstellung eines erfindungsgemäßen geformten keramischen Schleifkorns.

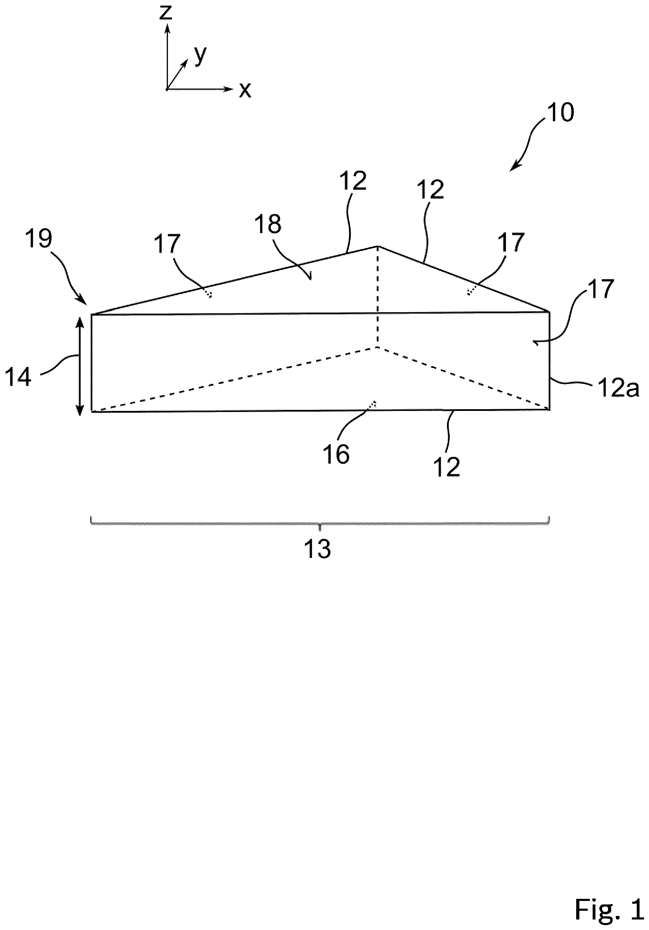

In Figur 1 ist eine beispielhafte Ausführungsform eines geformten keramischen Schleifkorns 10, wie es aus dem Stand der Technik bekannt ist, schematisch (insbesondere nicht maßstabstreu) dargestellt. Die geometrische Form des Schleifkorns 10 wird durch ein regelmäßiges dreiseitiges gerades Prisma mit den Seitenkanten 12 und den Höhenkanten 12a mit der Höhe 14 gebildet. Seitenkanten und Höhenkanten werden im Folgenden auch zusammengefasst als Kanten 12,12a bezeichnet. Die Grundfläche 16 und die Deckfläche 18 werden dementsprechend jeweils von drei gleich langen Seitenkanten 12 gebildet. Die Grundfläche 16 und die Deckfläche 18 sind gleich groß und sind durch die Höhe 14 voneinander beabstandet. Die drei Seitenflächen 17 werden von Rechtecken gebildet und sind im Wesentlichen gleich groß. In der beispielhaften Ausführungsform nach Figur 1 haben die Seitenkanten 12 eine Länge 13 von 1400 µm. Die Höhe 14 beträgt 410 µm. In einer alternativen Ausführungsform können die Länge 13 der Seitenkante 12 auch 1330 µm und die Höhe 14 400 µm betragen. Das keramische Schleifkorn 10 ist auf Basis von alpha-Al₂O₃ hergestellt.

Das in Figur 1 beispielhaft dargestellte geformte keramische Schleifkorn 10 bildet im Folgenden die Ausgangsbasis zur Darstellung von Ausführungsbeispielen des vorgeschlagenen geformten keramischen Schleifkorns 20,20a-e, welches erfindungsgemäß zumindest ein Strukturschwächungselement 22,22a-d aufweist. Das vorgeschlagene geformte keramische Schleifkorn 20,20a-e ist ebenfalls auf Basis von alpha-Al₂O₃ hergestellt und weist zumindest drei Flächen auf - hier beispielsweise zwei Seitenflächen 17 und die Deckfläche 18 -, von denen zumindest zwei Flächen eine gemeinsame Kante 12,12a bilden - beispielsweise bilden eine Seitenfläche 17 und die Deckfläche 18 eine Seitenkante 12 -, auf der zumindest eine den drei Flächen gemeinsame Ecke 19 liegt.

In den folgenden Figuren, die jeweils beispielhafte Ausführungsformen des erfindungsgemäßen Schleifkorns 20,20a-e in ebenfalls schematischen und nicht maßstabstreuen Ansichten darstellen, sind die Bezugszeichen zur Kennzeichnung der Seitenkanten, Flächen etc. aus Gründen der Übersichtlichkeit nicht eingefügt - diese lassen sich aber unmittelbar aus Figur 1 übertragen. Die Nomenklatur zum mit Figur 1 eingeführten Schleifkorn 10 ist unmittelbar übertragbar auf die folgenden Ausführungsbeispiele.

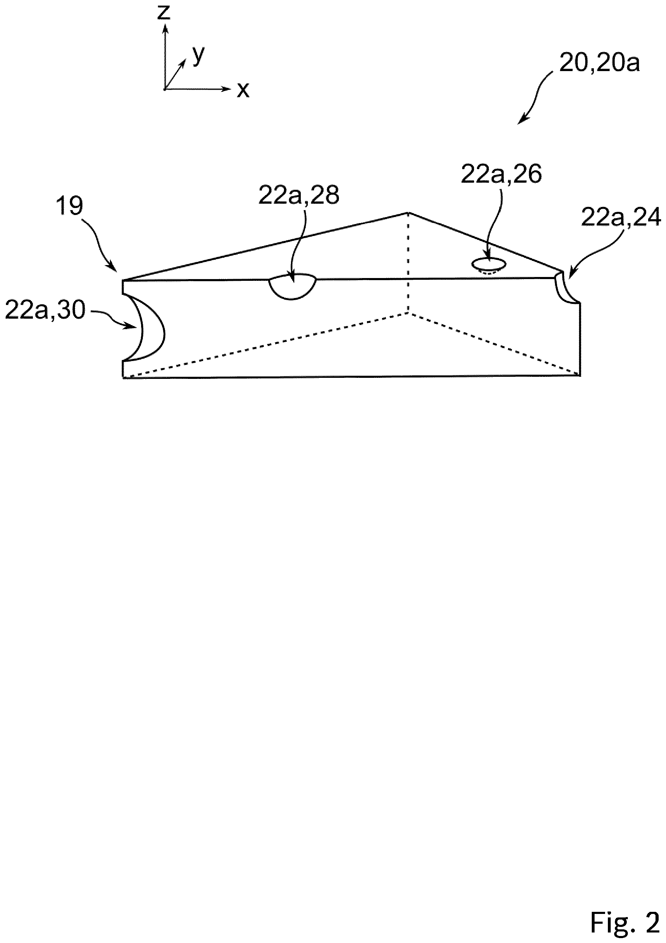

In Figur 2 ist eine beispielhafte Ausführungsform des erfindungsgemäßen keramischen geformten Schleifkorns 20a mit vier als offene Materialaussparungen 24-30 ausgeformten Strukturschwächungselementen 22a dargestellt. Ein erstes Strukturschwächungselementen 22a ist als eine offene Materialaussparung 24 in Form einer Mulde oder Delle auf der zumindest einen Ecke 19 des Schleifkorns 20,20a ausgebildet. Ein zweites Strukturschwächungselement 22a ist als eine offene Materialaussparung 26 in Form einer Mulde oder Delle auf der Deckfläche 18 ausgebildet. Ein drittes und ein viertes Strukturschwächungselementen 22a sind als eine offene Materialaussparungen 26,28 in Form einer Mulde oder Delle auf einer Seitenkante 12 bzw. auf einer Höhenkante 12a ausgebildet ist. Die Strukturschwächungselemente 22a sind dabei exzentrisch zum Schwerpunkt des Schleifkorns 20,20a ausgebildet, der sich im Zentrum des Schleifkorns 20,20a befindet (nicht näher dargestellt).

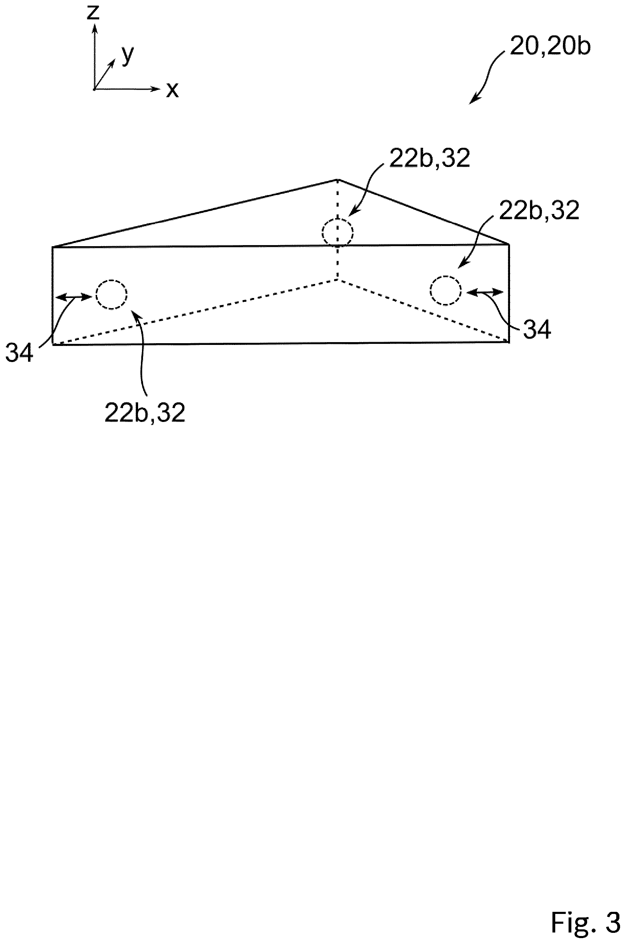

In Figur 3 ist eine beispielhafte Ausführungsform des erfindungsgemäßen keramischen geformten Schleifkorns 20b mit drei als geschlossene Materialaussparungen 32 ausgeformten Strukturschwächungselementen 22b dargestellt. Die drei Strukturschwächungselemente 22b sind dabei jeweils als geschlossene Materialaussparung 32 in Form eines Hohlraums, insbesondere einer Blase, vollständig im Inneren des Materials des Schleifkorns 20,20b ausgebildet. Die Strukturschwächungselemente 22b sind ebenfalls exzentrisch zum Schwerpunkt des Schleifkorn 20b ausgebildet, der sich auch in dem in Figur 3 dargestellten Schleifkorn 20,20b im Zentrum des Schleifkorns 20,20b befindet (nicht näher dargestellt). Die Strukturschwächungselemente 22b weisen dabei jeweils einen Abstand 34 zu einer der zumindest drei Höhenkanten 12a auf, der ungefähr zwischen 20 µm und 30 µm beträgt.

Die in den Figuren 2 und 3 dargestellten Strukturschwächungselemente 22,22a,22b weisen jeweils im Wesentlichen konvex gekrümmte, insbesondere sphärische, Gestalt auf, wobei ein Radius der konvex gekrümmten Materialaussparung ungefähr 50 µm beträgt.

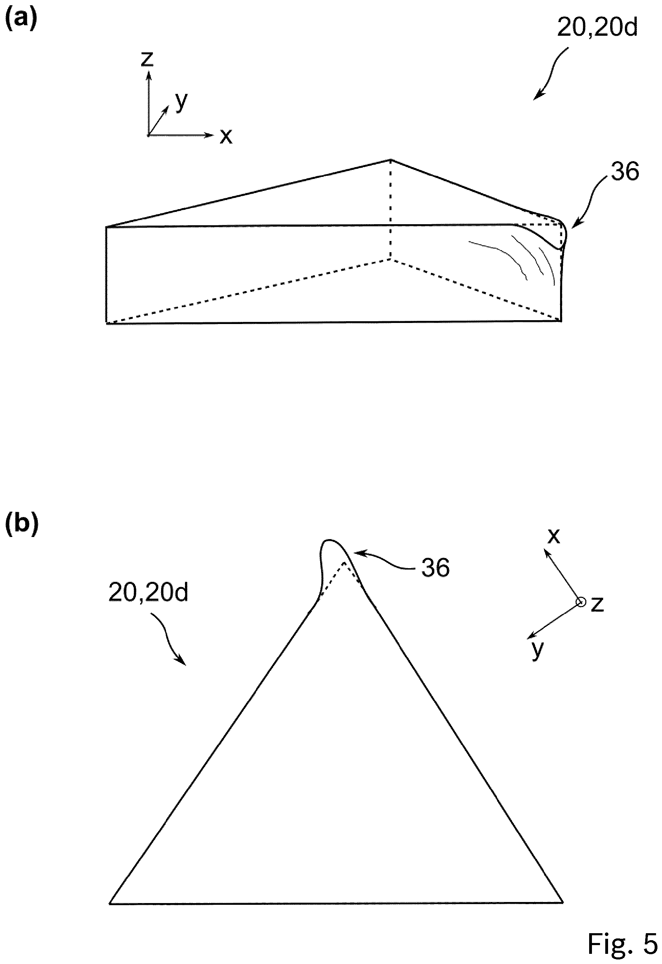

Es sei darauf hingewiesen, dass in einer beispielhaften Ausführungsform des Schleifkorns 20 auch eine Mehrzahl von als offene Materialaussparungen 24-30 und als geschlossene Materialaussparungen 32 ausgeformten Strukturschwächungselementen 22a,22b gleichzeitig in dem Schleifkorn 20 vorgesehen sein können (vgl. Figur 5).

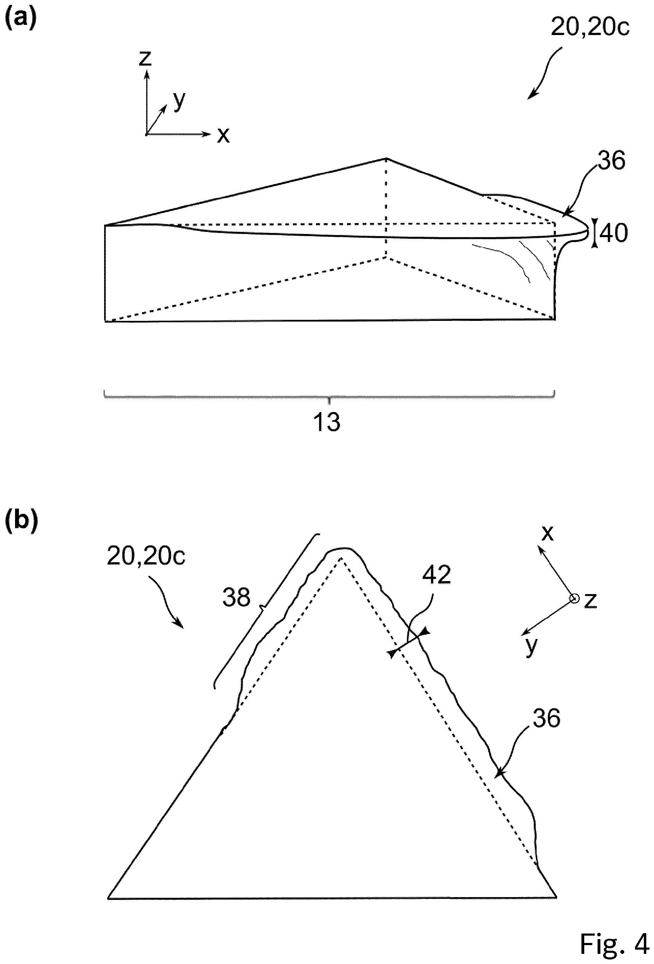

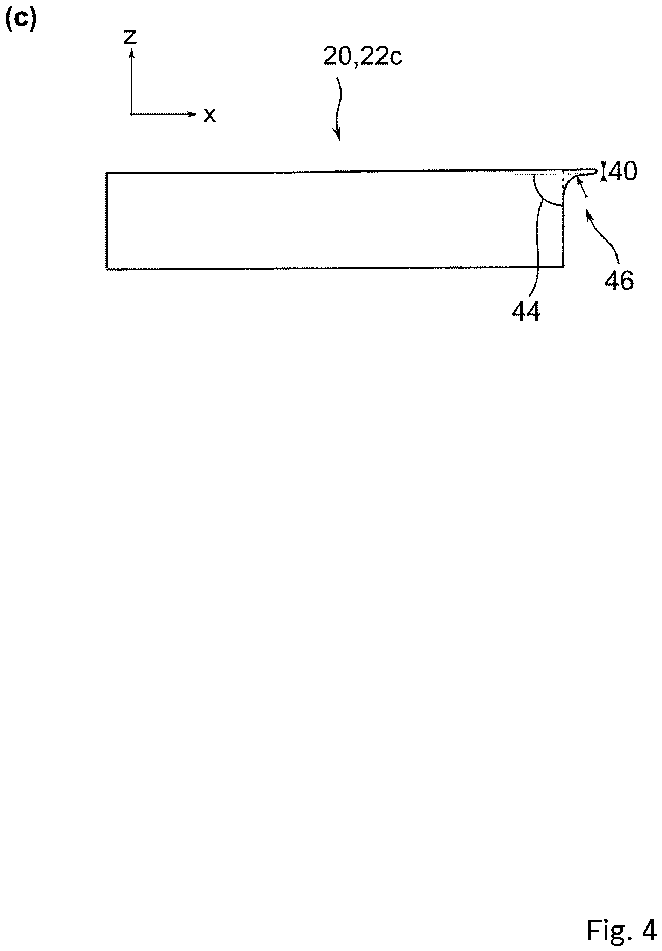

In Figur 4 ist eine beispielhafte Ausführungsform des erfindungsgemäßen keramischen geformten Schleifkorns 20c mit einem als Materialüberstand 36 an zwei Seitenkanten 12 und der zwischen den beiden Seitenkanten 12 eingeschlossenen Ecke 19 ausgeformten Strukturschwächungselement 22c dargestellt. Figur 4a zeigt das Schleifkorn 20c dabei in einer schematischen Perspektivansicht, während Figur 4b eine Aufsicht und Figur 4c eine Seitenansicht des Schleifkorn 20c wiedergeben (vgl. dargestellte Koordinatensystem zur Orientierung). Die gestrichelte Linie gibt dabei nicht sichtbare Kanten 12,12a des Schleifkorns 20c in der ursprünglichen Geometrie wieder (vgl. Figur 1), wobei die Kanten 12,12a entweder auf der Rückseite des Schleifkorns 20c liegen oder auf Grund des Materialüberstands 36 nicht mehr vorhanden sind. Der Materialüberstand 36 verläuft in dem dargestellten Ausführungsbeispiel entlang zumindest 45 % der Länge einer der Seitenkanten 12 (linke und rechte Kante 12) - dargestellt mit der geschweiften Klammer 38. Der Materialüberstand 36 weist dabei eine ungefähre (mittlere) Dicke 40 von ungefähr 25-30 µm auf. Ferner erstreckt sich der Materialüberstand 36 über eine (mittlere) Entfernung 42 von ungefähr 60 µm über die Seitenkante 12 hinaus. Der Materialüberstand 36 schließt mit der Deckfläche 18 einen Winkel 44 von ungefähr 85° ein. Dabei schließt der Materialüberstand 36 mittels eines gekrümmten, insbesondere kontinuierlichen, Übergangs, der durch einen Krümmungsradius 46 beschreibbar ist, an. Der Krümmungsradius beträgt in dem in Figur 4 dargestellten Ausführungsbeispiel ungefähr 70 µm.

In Figur 5 ist eine alternative, beispielhafte Ausführungsform des erfindungsgemä-ßen keramischen geformten Schleifkorns 20d mit einem als Materialüberstand 36 an einer Seitenkanten 12, insbesondere an einer Ecke 19, ausgeformten Strukturschwächungselemente 22d dargestellt. Figur 5a zeigt das Schleifkorn 20c dabei in einer schematischen Perspektivansicht, während Figur 5b eine Aufsicht wiedergibt (vgl. dargestelltes Koordinatensystem zur Orientierung). Die gestrichelte Linie gibt dabei ebenfalls nicht sichtbare Kanten 12,12a des Schleifkorns 20d in der ursprünglichen Geometrie wieder (vgl. Figur 1), wobei die Kanten 12,12a entweder auf der Rückseite des Schleifkorns 20d liegen oder auf Grund des Materialüberstands 36 nicht mehr vorhanden sind. Der Materialüberstand 36 weist die Form einer "Nase" an einer der Ecken 19, insbesondere auch einer Höhenkante 12a, auf.

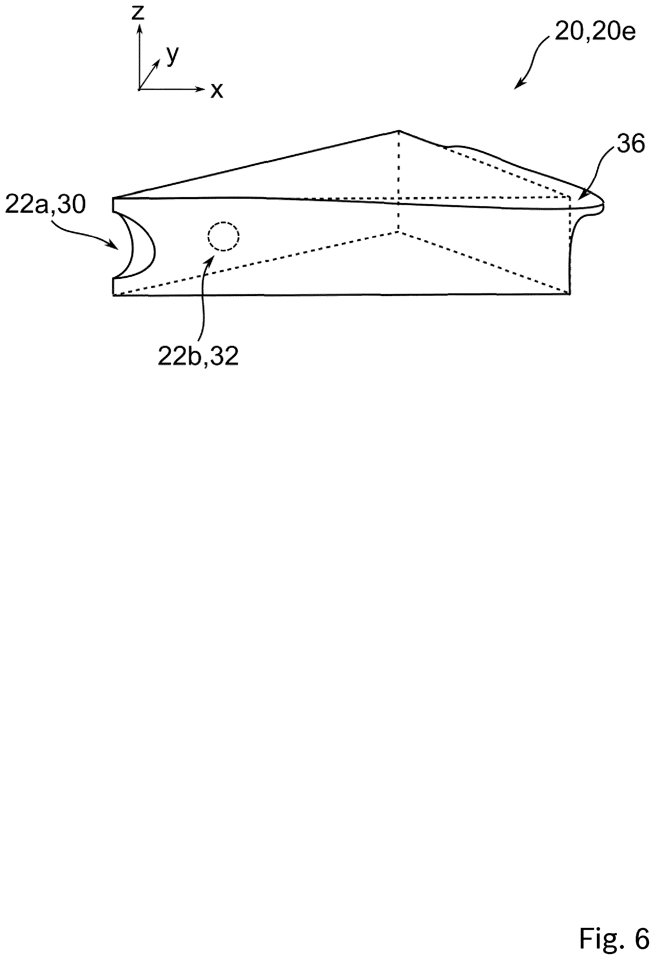

In Figur 6 ist eine beispielhafte Ausführungsform des erfindungsgemäßen keramischen geformten Schleifkorns 20e mit einem als geschlossene Materialaussparungen 32 ausgeformten Strukturschwächungselement 22b, mit einem als offene Materialaussparungen 30 ausgeformten Strukturschwächungselementen 22a sowie mit einem als Materialüberstand 36 an zwei Seitenkanten 12 und der zwischen den beiden Seitenkanten 12 eingeschlossenen Ecke 19 ausgeformten Strukturschwächungselement 22c dargestellt. Das Schleifkorn weist somit eine Mehrzahl von unterschiedlichen Strukturschwächungselementen 22,22a,22b,22c auf.

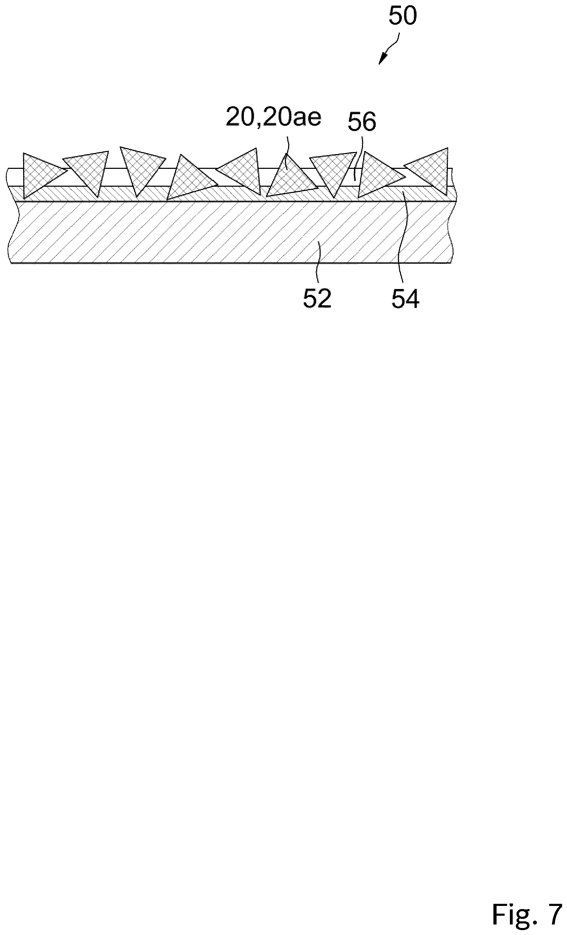

Figur 7 zeigt einen Ausschnitt aus einer beispielhaften Ausführungsform eines erfindungsgemäßen Schleifartikels 50 mit Schleifkörnern 20,20a-e in einer schematischen Schnittdarstellung. Der Schleifartikel 50 ist in der dargestellten Ausführungsform ein beschichteter Schleifartikel 50 mit einem Trägerelement 52 aus Vulkanfiber. Das Trägerelement 52 aus Vulkanfiber dient als flexible Unterlage für die Schleifkörner 20,20a-e. Vulkanfiber ist ein Verbundmaterial aus Zellstoff, insbesondere Baumwoll- oder Zellulosefasern, und ist dem Fachmann als flexible Unterlage für Schleifartikel aus dem Stand der Technik hinlänglich bekannt. Die Schleifkörner 20,20a-e sind mittels eines Grundbinders 54, zum Beispiel aus Phenolharz, auf dem Trägerelement 52 befestigt. Die Schicht aus Grundbinder 54 und Schleifkörnern 20,20a-e ist mit einem Deckbinder 56, zum Beispiel aus Phenolharz, beschichtet.

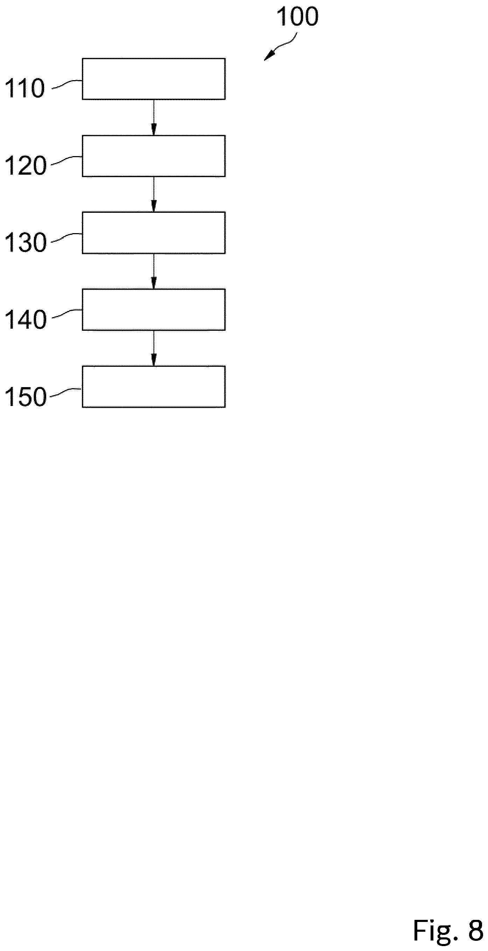

Das Verfahren zur Herstellung von geformten keramischen Schleifkörnern wird anhand des Ablaufdiagramms gemäß Figur 8 näher erläutert. Das Herstellverfahren 100 umfasst die folgenden Schritte. In einem ersten Schritt 110 erfolgt das Herstellen eines Schlickers aus zumindest einem alpha-Al₂O₃-Pulver und einem Dispersionsmittel, wobei in dem Schlicker ein Feststoffgehalt von 50 Gew.% bis 90 Gew.% und eine mittlere Partikelgröße von 0,1 µm bis 8 µm beträgt. In einer Ausführungsform des Verfahrens kann ferner ein ZrO₂-Pulver verwendet werden. In einem zweiten Schritt 120 erfolgt das Einfüllen des Schlickers in Vertiefungen einer Gießform (nicht näher dargestellt), wobei die Vertiefungen eine definierte Geometrie aufweisen. Die Gießform weist insbesondere eine Vielzahl von Formkavitäten auf, wobei die Vielzahl von Formkavitäten eine untere Formoberfläche, eine Formseitenwand und eine Tiefe zwischen unterer Formoberfläche und Oberfläche der Gießform umfasst. Die Formseitenwand und die Oberfläche der Gießform sind dabei in diesem Ausführungsbeispiel durch einen Krümmungsradius von 70 µm, verbunden (vgl. Ausführung zu Figur 4). Danach wir in einem dritten Schritt 130 das Trocknen des Schlickers in den Vertiefungen zu Schleifkornvorläufern vorgenommen, wobei ein Feststoffgehalt der Schleifkornvorläufer von 85 Gew.% bis 99,9 Gew.% beträgt. Nach dem Trocknen des Schlickers werden in einem vierten Schritt 140 die Schleifkornvorläufer aus den Vertiefungen entfernt. Ferner wird in einem fünften Schritt 150 das Sintern der Schleifkornvorläufer zu Schleifkörnern auf Basis von alpha-Al₂O₃ mit einem Gehalt an ZrO₂ von 5 Gew.% bis 30 Gew.% und einer Dichte von 92% bis 99,9% der theoretischen Dichte vorgenommen, wobei das alpha-Al₂O₃ eine mittlere Kristallitkorngröße von 0,5 µm bis 3 µm und das ZrO₂ eine mittlere Kristallitkorngröße von 0,25 µm bis 8 µm aufweist.

## Patentansprüche

1. Geformtes keramisches Schleifkorn (20,20a-e), insbesondere auf Basis von alpha-Al₂O₃, aufweisend zumindest drei Flächen (16,17,18), von denen zumindest zwei Flächen (16,17,18) eine gemeinsame Kante (12,12a) bilden, auf der zumindest eine den drei Flächen (16,17,18) gemeinsame Ecke (19) liegt, wobei das Schleifkorn (20,20a-e) zumindest ein Strukturschwächungselement (22,22a-d) aufweist, **dadurch gekennzeichnet, dass** das zumindest eine Strukturschwächungselement (22,22a,22b) als eine geschlossene Materialaussparung (32), insbesondere als ein Hohlraum, eine Blase oder eine Pore, im Schleifkorn (20,20a,20b,20e) realisiert ist, wobei das zumindest eine Strukturschwächungselement (22,22a,22b) eine im Wesentlichen konvex gekrümmte, insbesondere sphärische, bevorzugt kugelförmige, Gestalt aufweist mit einem Krümmungsradius von 10 µm bis 200 µm, bevorzugt von 25 µm bis 175 µm, besonders bevorzugt von 25 µm bis 50 µm.

2. Geformtes keramisches Schleifkorn (20,20a-e) nach Anspruch 1, **dadurch gekennzeichnet, dass** das zumindest eine Strukturschwächungselement (22,22a-d) exzentrisch zum Schwerpunkt des Schleifkorns (20,20a-e) ausgebildet ist.

3. Geformtes keramisches Schleifkorn (20,20b,20e) nach einem der Ansprüche 1-2, **dadurch gekennzeichnet, dass** das zumindest eine als geschlossene Materialaussparung (32) ausgebildete Strukturschwächungselement (22,22b) einen Abstand (34) zu einer der zumindest drei Flächen (16,17,18) oder zu der zumindest einen Kante (12,12a) oder der zumindest einen Ecke (19) des Schleifkorns (20,20b,20e) aufweist, der zwischen 1 % und 50 % des mittleren Durchmessers des Schleifkorns (20,20b20e) beträgt, insbesondere zwischen 5 % und 40 %.

4. Geformtes keramisches Schleifkorn (20,20a,20b,20e) nach einem der Ansprüche 1-3, **gekennzeichnet durch** eine Mehrzahl von als offene Materialaussparungen (24,26,28,30) und als geschlossene Materialaussparungen (32) ausgeformten Strukturschwächungselementen (22,22a,22b) oder eine Mehrzahl von als geschlossene Materialaussparungen (32) ausgeformten Strukturschwächungselementen (22,22a,22b).

5. Schleifartikel (50) aufweisend geformte keramische Schleifkörner (20,20a-e) nach einem der vorhergehenden Ansprüche.

6. Schleifartikel (50) nach Anspruch 5, **dadurch gekennzeichnet, dass** der Schleifartikel (50) zumindest einen Anteil von zumindest 5 %, bevorzugt von zumindest 15 %, besonders bevorzugt von zumindest 25 %, gemessen an der Gesamtanzahl von Schleifkörnern, an geformten keramischen Schleifkörnern (20,20a-e) nach einem der Ansprüche 1 bis 4 aufweist.

## Claims

1. Shaped ceramic abrasive particle (20, 20a-e), in particular based on alpha-Al₂O₃, having at least three faces (16, 17, 18) of which at least two faces (16, 17, 18) form a common edge (12, 12a) on which at least one corner (19) common to the three faces (16, 17, 18) is located, where the abrasive particle (20, 20a-e) has at least one structure-weakening element (22, 22a-d), **characterized in that** the at least one structure-weakening element (22, 22a, 22b) is realized as a closed recess (32) in the material, in particular as a void, a bubble or a pore, in the abrasive particle (20, 20a, 20b, 20e), where the at least one structure-weakening element (22, 22a, 22b) has an essentially convexly curved, in particular spherical, preferably ball-like, shape having a radius of curvature of from 10 µm to 200 µm, preferably from 25 µm to 175 µm, particularly preferably from 25 µm to 50 µm.

2. Shaped ceramic abrasive particle (20, 20a-e) according to Claim 1, **characterized in that** the at least one structure-weakening element (22, 22a-d) is located eccentrically to the centre of gravity of the abrasive particle (20, 20a-e).

3. Shaped ceramic abrasive particle (20, 20b, 20e) according to either of Claims 1-2, **characterized in that** the at least one structure-weakening element (22, 22b) configured as closed recess (32) in the material is at a distance (34) which is in the range from 1% to 50% of the average diameter of the abrasive particle (20, 20b, 20e), in particular from 5% to 40%, from one of the at least three faces (16, 17, 18) or from the at least one edge (12, 12a) or from the at least one corner (19) of the abrasive particle (20, 20b, 20e).

4. Shaped ceramic abrasive particle (20, 20a, 20b, 20e) according to any of Claims 1-3, **characterized by** a plurality of structure-weakening elements (22, 22a, 22b) configured as open recesses (24, 26, 28, 30) in the material and as closed recesses (32) in the material or a plurality of structure-weakening elements (22, 22a, 22b) configured as closed recesses (32) in the material.

5. Abrasive article (50) comprising shaped ceramic abrasive particles (20, 20a-e) according to any of the preceding claims.

6. Abrasive article (50) according to Claim 5, **characterized in that** the abrasive article (50) comprises at least a proportion of at least 5%, preferably at least 15%, particularly preferably at least 25%, measured relative to the total number of abrasive particles, of shaped ceramic abrasive particles (20, 20a-e) according to any of Claims 1 to 4.

## Revendications

1. Grain abrasif céramique moulé (20, 20a-e), en particulier à base d'alpha-Al₂O₃, présentant au moins trois faces (16, 17, 18), dont au moins deux faces (16, 17, 18) forment un bord commun (12, 12a) sur lequel se situe au moins un angle (19) commun aux trois faces (16, 17, 18), le grain abrasif (20, 20a-e) présentant au moins un élément d'affaiblissement de structure (22, 22a-d), **caractérisé en ce que** ledit au moins un élément d'affaiblissement de structure (22, 22a, 22b) est réalisé comme un évidement matériel fermé (32), en particulier comme un espace creux, une bulle ou un pore, dans le grain abrasif (20, 20a, 20b, 20e), ledit au moins un élément d'affaiblissement de structure (22, 22a, 22b) présentant une configuration sensiblement courbée de manière convexe, en particulier sphérique, de préférence en forme de bille présentant un rayon de courbure de 10 µm à 200 µm, de préférence de 25 µm à 175 µm, de manière particulièrement préférée de 25 µm à 50 µm.

2. Grain abrasif céramique moulé (20, 20a-e) selon la revendication 1, **caractérisé en ce que** ledit au moins un élément d'affaiblissement de structure (22, 22a-d) est conçu de manière excentrique par rapport au centre de gravité du grain abrasif (20, 20a-e).

3. Grain abrasif céramique moulé (20, 20b, 20e) selon l'une des revendications 1-2, **caractérisé en ce que** ledit au moins un élément d'affaiblissement de structure (22, 22b) conçu comme un évidement matériel fermé (32) présente une distance (34) par rapport à l'une desdites au moins trois faces (16, 17, 18) ou audit au moins un bord (12, 12a) ou audit au moins un angle (19) du grain abrasif (20, 20b, 20e) qui représente entre 1 % et 50 % du diamètre moyen du grain abrasif (20, 20b, 20e), en particulier entre 5 % et 40 %.

4. Grain abrasif céramique moulé (20, 20a, 20b, 20e) selon l'une des revendications 1-3, **caractérisé par** une pluralité d'éléments d'affaiblissement de structure (22, 22a, 22b) réalisés comme évidements matériels ouverts (24, 26, 28, 30) et comme évidements matériels fermés (32) ou une pluralité d'éléments d'affaiblissement de structure (22, 22a, 22b) réalisés comme évidements matériels fermés (32).

5. Article abrasif (50) présentant des grains abrasifs céramiques moulés (20, 20a-e) selon l'une des revendications précédentes.

6. Article abrasif (50) selon la revendication 5, **caractérisé en ce que** l'article abrasif (50) présente au moins une proportion d'au moins 5 %, de préférence d'au moins 15 %, de manière particulièrement préférée d'au moins 25 %, mesurée par rapport au nombre total de grains abrasifs, de grains abrasifs céramiques moulés (20,20a-e) selon l'une des revendications 1 à 4.
